# EUROPEAN PATENT APPLICATION

(11) **EP 1 548 596 A1**
(43) Date of publication of application: **29.06.2005**
(21) Application number: 04257952.4
(22) Date of filing: 20.12.2004
(51) Int. Cl.: G06F 11/34, G06F 17/60

(54) **Method of load testing a transactional computer system**

(30) Priority: 23.12.2003 GB 0329848
(71) Applicant: Red Gate Software Ltd, Cambridge CB2 3DD (GB)
(72) Inventor: Galbraith, Simon D., Cambridge CB3 9LW (GB); Davidson, Neil G., Cambridge CB1 5NY (GB)
(74) Representative: Hill, Christopher Michael

(57) **Abstract**

A method for measuring frustration experienced by a user of a system, which method comprises: (a) requiring the user to initiate the method; (b) after a delay time, requesting the user to provide a frustration number representative of the frustration caused by the delay time; and (c) recording the frustration number provided for that delay time such that it is relateable to that delay time, wherein the frustration number is stored in conjunction with the delay time.

## Description

### Field of the Invention

The present invention relates to a method for testing a system to determine the likely frustration that will be experienced by users of a system, and percentage of users likely to abandon the system. The invention relates in particular to computer or software systems that can be used simultaneously by many users, and to frustration caused by delay times between the request and delivery of information in such systems.

### Background of the Invention

In computer systems that can be used simultaneously by many users, it is often desirable to be able to test and monitor the performance of the systems. Such systems are known as "transactional servers" and common examples are web sites, web applications, telephone applications and web services. In such systems devices such as computers, mobile phones, telephones and mobile devices connect over a network to a transactional server where they can access information or applications on the transactional server.

There are advantages to the user of a transactional server if the server does not exhibit long delays during the downloading of pages or servicing of requests. Users typically become frustrated if they are made to wait many seconds, for example for a page to download, and may eventually abandon a transactional server. This can be very costly for the owners of the transactional server in terms of lost business and lost customers. Many transactional server owners and operators therefore wish to test the performance of their transactional servers to ensure that a typical user will not be made to wait long periods of time during their time connected to it. Following initial testing, the transactional server can then be modified and re-tested to ensure that the performance is satisfactory to the owner or operator.

There exists a wide variety of commercially available software tools, known as load testing or monitoring tools, for testing and monitoring the performance of transactional servers such as web sites or web services. Examples of such tools are the Advanced .NET Testing System® product of Red Gate Software Ltd, LoadRunner® by Mercury Interactive Inc, Silk Performer® by Segue Inc, and ACT® and Homer® by Microsoft Inc. These tools are typically used on transactional servers that are not yet deployed or launched. Testing will often be done to ensure that a transactional server will be able to support the number of users anticipated to be using it once it is launched.

Load testing tools are designed to predict how well a transactional server will perform when it is in use by a number of users. Information that can be produced by load tests of systems such as web sites is generally of the form of a measurement indicating the average page download time for X concurrent simulated users. The average page download time is generally given as Y seconds.

In use, a load testing tool will simulate a number of users using a transactional server. A tool may measure any or all of the following: the time taken for information to be transferred from the server to the users; the quantity of data transferred to users; whether or not information requested by a user has been delivered correctly.

The results of load tests can be enhanced by the use of statistical processing and used to generate histograms, averages, graphs and charts for displaying to the test users. A large amount of data can be obtained from a load test and consequently it can be a daunting task for a test user to attempt to analyse the results and interpret them in the context of the transactional server tested. What is important to a person viewing the results of a load test is usually the simple question of how the server's performance will be perceived by its users. However, it is a disadvantage of current systems that the person will be supplied with a series of figures or graphs, and will not easily be able to conclude whether or not the server's performance is adequate. For example, it may be calculated that a system being used by 300 simulated users concurrently produces an average download time of 3.2 seconds with a standard deviation of 1.3 seconds. It is very subjective to conclude from this data whether the performance of the system is good or poor, or how the system would be perceived by users.

The capacity of other systems such as telephone systems can be measured by a well understood theory commonly known as 'Queuing Theory'. The key elements of this work were conducted by a Danish Mathematician A.K. Erlang who first published work on this is 1909 and which has been extended since then. Queuing Theory addresses the questions of how much capacity should be built into a system which is composed of discrete units of capacity. It is commonly used to predict how much capacity is required for some transactional servers such as telephone systems, typing pools, call centres, bank customer points and other analogous systems. Queuing Theory's main unit is the 'Erlang' which is a measure of the probability that a user will be able to use a system *immediately* when they try to access the system (an example of this is the probability that the telephone is engaged when you try to call your bank).

There is an extension to queuing theory that touches on the nature of the present invention which is sometimes known as the Erlang C problem. This relates to a probabilistic calculation of the length of time someone will be made to wait for a system with a given number of erlangs (and some other information). (An example of this is the situation when a person calls a bank and an automated voice tells him that no one can take his call at the moment but please hold and someone will be with you as soon as possible - the Erlang C problem is about probabalistically calculating an average wait time).

Embodiments of the present invention tie into the Erlang C problem by determining what an acceptable wait would be by measuring the frustration and abandonment of real users in a similar system and predicting what the likely frustration and abandonment characteristics would be.

http://www.users.cloud9.net/~stark/ctappd.pdf - provides a good overview of Queueing Theory and discusses the Erlang C problem.

Once a transactional server has been deployed and is in use by a number of users, it is often desirable to monitor the performance of the server to ensure that it is capable of supporting the number of users wishing to access it. Monitoring will often be carried out regularly and frequently. Examples of software tools and services for monitoring performances of transactional servers are Uptime® and AppMonitor® , and companies such as Alertsite.com Inc, Spyn and Webmaster solutions offer transactional server monitoring services. Monitoring tools typically work by simulating one user making many thousands of uses of a system on an regular or continuous basis.

An example of a benchmark often used in transaction server monitoring is the average download time of a page of information or file of html from a web site. This is sometimes called a page download time. Although this is interesting information, it has two important disadvantages. Firstly, it doesn't provide an idea of business impact. Secondly, a distribution of results with a large standard deviation cannot be distinguished from a distribution with a small standard deviation.

Another benchmark often used in monitoring is the average availability of a live site. This is useful to know, but it doesn't give any information about the satisfaction of users using the site. For example, a site may be available but many users may be leaving due to frustration at the slow response times.

The above-mentioned problems with presenting load test and load monitoring data to users exist partly because of the lack of reliable research to determine the length of delay that transactional server users are typically willing to tolerate. It is not known how frustrating an average user would find a particular page download time. In view of this, it becomes difficult for the owner of a web site to determine from results of a load test whether the web site's performance is acceptable, and if so, just how good or bad it will be perceived to be by a user.

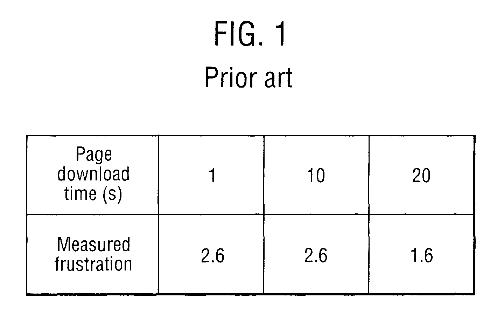

Some research has been carried out in this respect. In a particular study, described at http://psychology.wichita.edu/surl/usabilitynews/1s/time_delay.htm, users were asked to rate on a scale from 1 to 5 their frustration at using an unfamiliar application running on a transactional server. The results were then averaged for different download times (see Figure 1). The survey was trying to measure usability of the application concurrently with frustration and the results are unclear as to whether users were frustrated by poor application design or delays. The specific criteria are: "Frustration & Task Difficulty are on a 5-point scale with 1 = no frustration and very easy and 5 = lots of frustration and very difficult" The mixing up of these two criteria at the point of entry by the study subjects makes the separate criteria hard to quantify individually.

Furthermore, this study suffers from the fact that the users taking part in the survey had been informed about the study and were therefore anticipating delays. This would create a false, unrealistic environment. The users were not simply "surfing the net" or searching for particular information, but were participating in a study and may therefore be less likely to be frustrated by delays or to give realistic ratings of their frustration. Indeed, the results of this survey are in general contrary to what would be expected. For example, users were measured as being more frustrated by small delay times than by larger ones. The results would therefore seem to be invalid. Additionally, we know that in reality people abandon applications that perform poorly but this result is never seen in these experiments as the experiments provide no way of simulating users abandoning a system.

Other research includes tests in which participants were given financial rewards for taking part. Again, this is unlikely to provide reliable results since the participants were in an unrealistic environment and would be less likely to be frustrated by delays due to the fact that they would receive a reward for taking part. In other tests, participants were required to complete complex tasks on transactional servers and rate their frustration. Once again, this produces an unrealistic situation in which a participant is aware that he is being tested and the study is unlikely to yield useful results due to the concurrent testing of usability and download delay frustration.

Results of such research are more accurate and more valid if a large number of people are involved in the research such that a large amount of data can be obtained and analysed. Thus far, there has been no large-scale survey or research attempted.
It is a problem of existing research in this field that account has not been taken of the type of data that a user is waiting for when being tested for frustration levels. Web site users may be willing to wait for longer periods for certain types of data such as street maps or flight availability details than for other types such as news reports. If research is carried out on a particular web site providing only a type of information that users are generally willing to wait for, this may influence a user's expectations, and therefore may affect how frustrated a user feels at being made to wait for pages to download.

There do not appear to have been any studies conducted which aim to link frustration at using a transactional server with likelihood of abandonment of the server.

It is an object of the present invention to overcome the above-stated problems associated with the prior art methods and in particular with the presentation of load test and monitoring results.

It is also an aim of embodiments of the present invention to allow providers of transactional servers to improve or tailor their servers by providing an improved method for correlating download times or request servicing times with user frustration and with abandonment probabilities. It is a further aim of embodiments of the invention to link frustration measurements with abandonment measurements, thereby producing meaningful test data which can be used by providers of transactional servers in improving their systems.

### Summary of the Invention

According to a first aspect of the present invention there is provided a method for measuring frustration experienced by a user of a system, which method comprises: (a) requiring the user to initiate the method; (b) after a delay time, requesting the user to provide a frustration number representative of the frustration caused by the delay time; and (c) recording the frustration number provided for that delay time such that it is relateable to that delay time, wherein the frustration number is stored in conjunction with the delay time.

In embodiments of the invention, the delay times could suitably be pre-determined or random.

The method can suitably be used in the context of web sites such that a web page is displayed to the user requesting the user to press a button or follow a link to initiate the method, and after a delay time a further web page is displayed to the user requesting the user to enter a frustration number representing the user's frustration caused by the delay time.

According to a second aspect of the present invention there is provided a method for providing a series of weighting factors, which weighting factors relate to delay times experienced by users of a system, which method comprises: (a) defining a series of delay time intervals; (b) calculating a single frustration number for each delay time interval, from recorded frustration numbers representative of frustration experienced by a user of a system due to delay times exhibited by the system; (c) optionally normalising each single frustration number to produce a single normalised frustration number for each delay time interval; (d) defining a weighting factor for each delay time interval as the single frustration number for that interval, or the single normalised frustration number for that interval.

This method advantageously produces weighting factors that accurately represent user frustration for any given delay time interval based on data correlating delay times and frustration experienced by users.

According to a third aspect of the present invention there is provided a method for determining a frustration coefficient (the Red Gate Frustration Coefficient™) for a system prone to one or more delay times, which frustration coefficient is representative of the frustration caused to a user by the delay times in the system, which method comprises: (a) testing the system to determine one or more delay times to which the system is prone; (b) determining the number of delay times exhibited by the system within each one of a series of pre-defined delay time intervals; (c) for each delay time interval, multiplying the number of delay times exhibited by the system in that interval by a weighting factor associated with that interval, to produce a frustration coefficient for each interval; and (d) calculating a frustration coefficient for the system from the frustration coefficients of the delay time intervals.

This method is preferably used in conjunction with transactional server tests or monitoring. The results of a measurement are combined according to the method with weighting factors to produce a frustration coefficient for a transactional server. The frustration coefficient is advantageously a single number that represents how frustrating a typical user would find the server to use. This frustration coefficient is very easily interpreted and indicates clearly the performance of the transactional server.

According to a fourth aspect of the present invention there is provided a method for determining a frustration coefficient for a system prone to one or more delay times, which frustration coefficient is representative of the frustration caused to a user by the delay times in the system, which method comprises: (a) recording a series of frustration numbers representative of frustration experienced by a user of a system due to delay times exhibited by the system; (b) providing a weighting factor for each of a series of pre-defined delay time intervals, based upon the recorded frustration numbers; (c) testing a system to determine one or more delay times to which the system is prone; and (d) determining a frustration coefficient for the system based upon the weighting factors and the number of delay times exhibited by the system in each of the pre-defined delay time intervals.

Preferably, the determined frustration coefficient takes into account any users who abandoned the system in that or any previous intervals by ascribing to them a frustration value representing a maximum level of frustration.

According to a fifth aspect of the present invention there is provided a method for measuring an abandonment profile of a system, which method comprises: (a) requiring the user to initiate the method; (b) after a delay time, requesting the user to provide an indication relevant to the delay time; and (c) recording the indication provided for that delay time such that the indication is relateable to the delay time, wherein if the user abandons the system during that delay time, the indication is an abandonment indication.

According to a sixth aspect of the present invention there is provided a method for providing a series of ratios, which ratios relate to an abandonment profile of a system, which method comprises: (a) defining a series of delay time intervals; and (b) calculating a ratio for each delay time interval, from pre-recorded indications representative of an abandonment profile of the system, which ratio is represented by the total number of abandonment indications recorded for each delay time interval to the total number of indications recorded for that interval.

Preferably, the method according to the sixth aspect of the invention allows abandonment to be taken into account if it occurred prior to a given delay time interval. This results in an accurate abandonment profile.

According to a seventh aspect of the present invention there is provided a method for determining an abandonment coefficient (the Red Gate Abandonment Coefficient™) for a system prone to one or more delay times, which abandonment coefficient is representative of the likelihood of a user abandoning the system, which method comprises: (a) testing the system to determine one or more delay times to which the system is prone; (b) determining the number of delay times exhibited by the system within each one of a series of pre-defined delay time intervals; (c) for each delay time interval, multiplying the number of delay times exhibited by the system in that interval by an abandonment percentage associated with that interval, to produce an abandonment coefficient for each interval; and (d) calculating an abandonment coefficient for the system from the abandonment coefficient™ of the delay time intervals.

According to an eight aspect of the present invention there is provided a method for determining an abandonment coefficient for a system prone to one or more delay times, which abandonment coefficient is representative of the likelihood of a user abandoning the system during one of the delay times, which method comprises: (a) recording a series of indications representative of an abandonment profile of the system; (b) providing an abandonment percentage for each of a series of pre-defined delay time intervals, based upon the recorded indications; (c) testing a system to determine one or more delay times to which the system is prone; and (d) determining an abandonment coefficient for the system based upon the abandonment percentages and the number of delay times exhibited by the system in each of the pre-defined delay time intervals.

Preferably, test data acquired in accordance with embodiments of the present invention can be used to enable efficient modification of a transactional server system so that the delay times associated with the system can be improved.

Advantageously, the methods in accordance with embodiments of the present invention allow frustration data to be obtained in a way that does not prejudice a user before the user is required to submit a rating of his or her frustration. Minimal information is given to the user before the method is initiated to ensure that the user's evaluation of his frustration is not tainted by prior knowledge of the nature of the method. In this way, realistic and reliable information can be achieved correlating delay times with user frustration. This information can then be used in the improvement of systems. The causes of the delay times can be investigated, and the system can be modified to give delay times that correspond to satisfactory system performance. Modified versions of the system can be re-tested in accordance with embodiments of the invention so that the effects of modifications can be measured to simulate the system's performance as seen by simulated users.

### Brief Description of Drawings

The invention will now be described with reference to the accompanying drawings, in which:
Figure 1 is an example of prior art frustration research results;
Figure 2 shows a method for measuring frustration;
Figure 3 illustrates the steps of a method for determining a frustration coefficient of a system;
Figure 4 shows a sample of results analysed in accordance with the present invention; and
Figure 5 shows examples of web sites analysed in accordance with the present invention.

### Detailed Description of the Invention

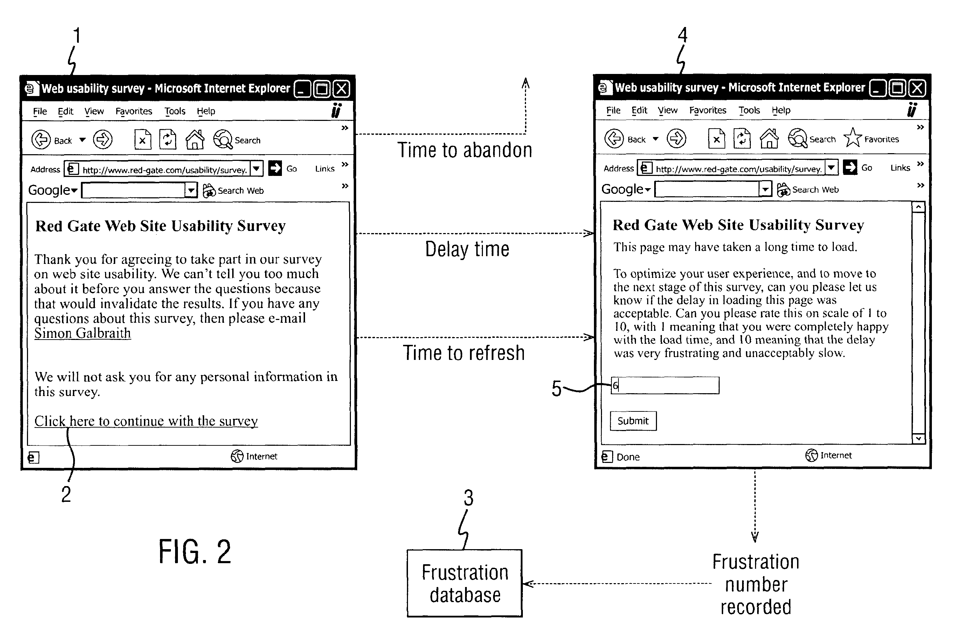

The invention is described herein with reference to a particular non-limiting embodiment. According to one particularly preferred embodiment, a survey is carried out on a web site. The survey is intended to produce a series of data correlating page download delay times with users' evaluations of the frustration caused to them by the delays. The survey is described below with reference to Figure 2.

On following a link to a particular web page 1 of the web site, a user will be invited to take part in a survey. The page 1 contains a link 2. When the user follows the link 2, the user will experience a delay before a further web page 4 is displayed. The length of this delay is pre-determined by software controlling the web site. The delay is randomly generated and is known by the software. In the present embodiment, the delay time is between 0 and 30 seconds. During the delay, the user will do one of three things: abandon the web site; click a "refresh" button in an attempt to speed up the download of the further page; or wait until the further page 4 appears without clicking any links or buttons.

In the event that the user abandons the web site during the delay, the time taken for the user to abandon after following the link 2 is preferably recorded by the software running the web site. It can reasonably be assumed that the user was very frustrated by the delay, and a frustration number representing a maximum level of frustration will be assigned to this user and recorded.

In the event that the user clicks a refresh button during the delay, an indication that the user refreshed is recorded such that it can be related to the delay time. A refresh indication can give useful information about the length of time a user is willing to wait before he or she starts to become sufficiently frustrated to click "refresh".

Optionally, a frustration number supplied by a person who has refreshed can be omitted from the collected test data, and a separate indication can instead be provided to indicate that the delay time experienced by that person was unacceptably long.
After refreshing, the page 4 will be shown immediately to the user. Page 4 displays an invitation to the user to enter a number (5) on a scale of 1 to 10 representing the level of frustration caused by the delay, with 1 representing no frustration (i.e. a short time) and 10 representing a high level of frustration (i.e. a very long time, as perceived by the user). The user will then respond to the invitation, and the frustration number given will be recorded.

In the event that a user waits for the page 4 to download without abandoning or refreshing, the frustration number (5) provided by the user may be stored in a frustration database 3 in such a way that it can be related to the pre-determined delay time.

In a case of abandonment the information recorded is typically stored in the frustration database 3 in such a way that the frustration number can be related to the length of the pre-determined delay time, and an indication that the user abandoned the web site can be related to the delay time.

In a case where a user refreshes, the frustration number 5 is stored in the frustration database 3 in such a way that it can be related to the time before the refresh button was clicked (that is, the time taken for the page 4 to download).

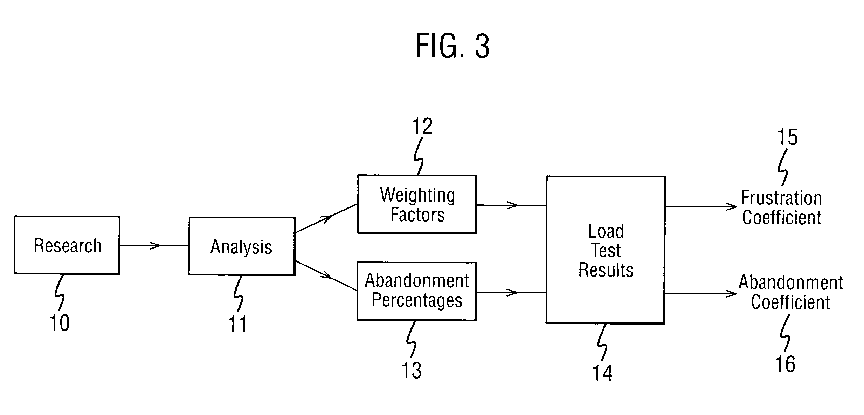

After the process illustrated in Figure 2 has been repeated a number of times (shown as step 10 in Figure 3) using a number of delay times and preferably a number of users, the data stored in the frustration database 3 is then analysed (step 11 in Figure 3).

A suitable technique for analysing the results of the research 10 is as follows.

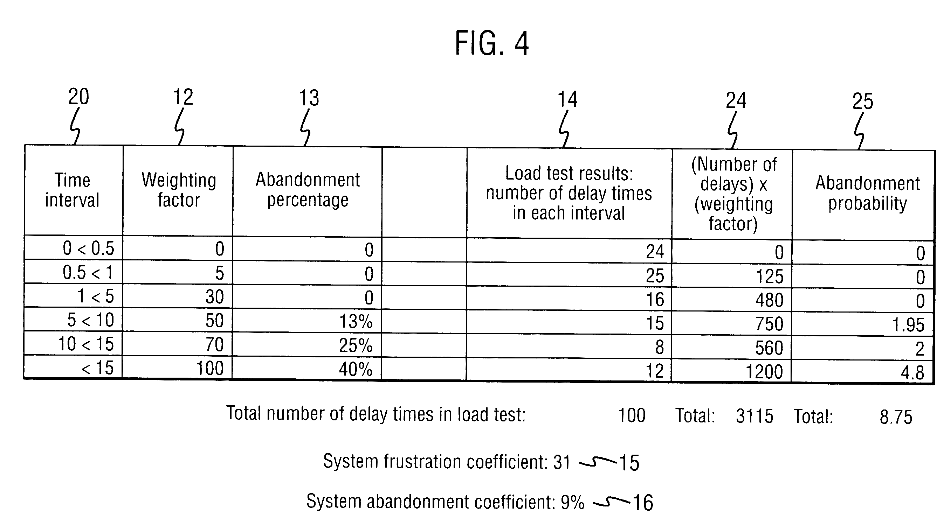

The pre-determined delay times between 0 and 30 seconds are split into a series of intervals. The intervals selected are not especially limited and should in general be determined according to the range of delays typically found in the type of system under investigation. Generally the time delays represented in the highest interval should be comparable with the maximum delay that the user was subjected to after following link 2. In the present embodiment the intervals are preferably: 0-0.5 seconds; 0.5-1 second; 1-5 seconds; 5-10 seconds; 10-15 seconds and >15 seconds (shown as 20 in Figure 4) since these intervals are particularly appropriate when testing a web site, since delays experienced by web users are generally of comparable lengths to these intervals.

For each interval, the frustration numbers related to delay times within that interval are averaged to produce a single frustration number for the interval. In this example, this will produce six single frustration numbers, each one associated with a delay time interval.

As alternatives to averaging the frustration numbers, an algorithm or formula could be derived and used to determine single frustration numbers, or the frustration numbers could be fitted to a curve of frustration number against delay time and this could be used to determine the single frustration numbers.

The single frustration numbers are then optionally normalised. A preferred way of normalising the single frustration numbers is multiplying by 10 and rounding to the nearest integer. This produces a series of six weighting factors (12 in Figure 4) between 0 and 100, each one associated with a delay time interval 20.

In a similar way, abandonment coefficients™ are calculated. For each defined delay time interval 20, the number of users abandoning the web site within that time interval is calculated as a proportion of the total number of delay times falling within that interval. In this example, this produces six abandonment ratios. The abandonment ratios are then optionally normalised. In a preferred embodiment, the ratios are expressed as percentages 13 which represent a likelihood for a given time interval that a user will abandon a web site if a page has a download time in that interval.

The abandonment coefficients™ and weighting factors for frustration obtained as described above can be applied to results of standard load tests 14. In this manner, the figures 15 and 16 can be derived to describe the performance of a web site in a meaningful way.

As mentioned in relation to prior art load testing tools, when a load test is carried out, much data 14 is produced describing how a tested transactional server performed when in use by a number of simulated concurrent users. An example of the information that can be obtained is the time taken for each of a number of pages to load. Using a series of time intervals 20 as defined above, the number of pages having loading times in each of the intervals 20 can be determined 14.

From the example load test results shown at 14 in Figure 4, it can be seen that during the simulation, 24 pages took between 0 and 0.5 seconds to load; 25 pages took between 0.5 and 1 second to load, and so on.

The number 14 in each interval 20 can now be multiplied by the weighting factors 12 calculated in step 11 of Figure 3. The weighting factors take into account the relative frustration felt by users made to wait different times for pages to load. By multiplying the weighting factors 12 with the results 14, a series of coefficients 24 are derived. The sum of these coefficients represents the total frustration experienced by all simulated users of the transactional server during the load test. In this example, the total figure is 3115. This figure is translated into a frustration coefficient 15 on a scale between 0 and 100 by dividing it by the total number of simulated page downloads during the test, in this example 100. The frustration coefficient for this load test is therefore 31 (rounded to the nearest integer).

Similarly, a coefficient can be produced from the basic load test results to represent how likely an average user would be to abandon the server.

For this, the results 14 are multiplied by the abandonment percentages 13 to produce a series of figures 25. These figures 25 are then summed to give a total of 8.75. This represents how likely a user would be to abandon the transactional server if it performed as it did during the load test. The total can be rounded to the nearest integer. In this example, the final abandonment coefficient 15 is 9%, that is, roughly one in ten users would abandon the server.

A person analysing the results of the load test can see at a glance how well the transactional server performed during the load test. A frustration coefficient of 31 represents a fairly poor performance. Zero would mean that every user was perfectly satisfied with the server and was never subjected to delays, and 100 would mean an unacceptable performance with users being so frustrated that they will abandon the system.

The person analysing the results would probably wish to refine the transactional server's performance in order to achieve an improved frustration coefficient 15 and abandonment coefficient 16. After making various adaptations to the server, the person may wish to carry out a further load test. Simple software could then produce a further frustration coefficient 15 and abandonment coefficient 16 to inform the person clearly as to whether the adaptations were effective in improving the server's performance.

A preferred technique for analysing the frustration test data is to convert it to a function of the form F=F(t), where F is the average measure frustration, F(t) is a polynomial, and t is the delay time.

Similarly, a preferred technique for analysing the abandonment test data is to convert it to a probability density function A=A(t), where A is the percentage of users who would have abandoned for a given delay time t. A(t) is a polynomial function of t.

The above formulae can be combined to provide a true prediction of user frustration F_{c}(t). F_{c}(t) = (1-A(t)) × F(t) + A(t) × Fₘₐₓ, where Fₘₐₓ is the maximum assignable level of frustration (e.g. 10 in the embodiment shown in Fig. 2).

Data analysis of the kind described above is well known to those skilled in the arts of system measurement and load testing.

### Examples

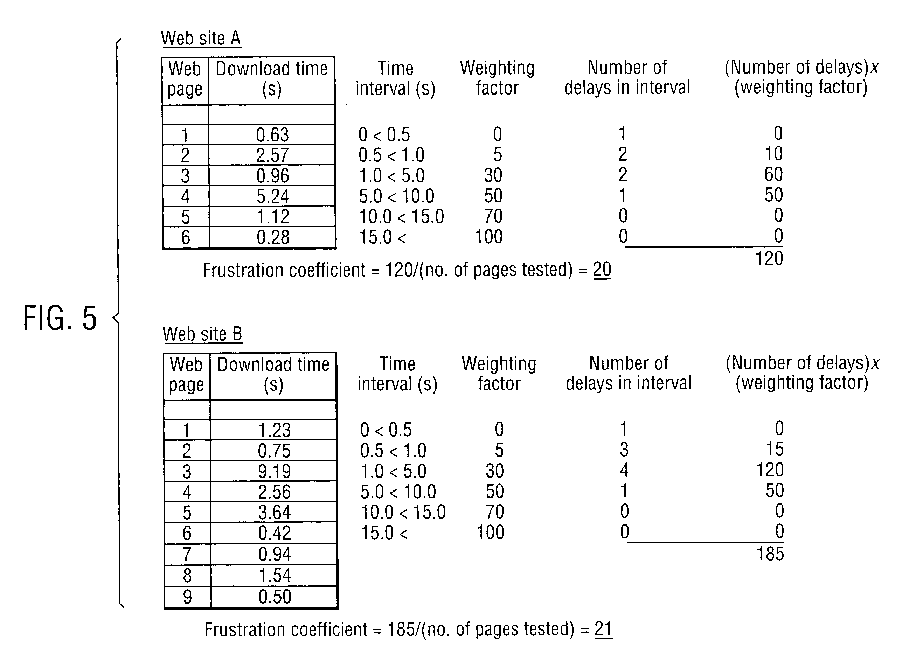

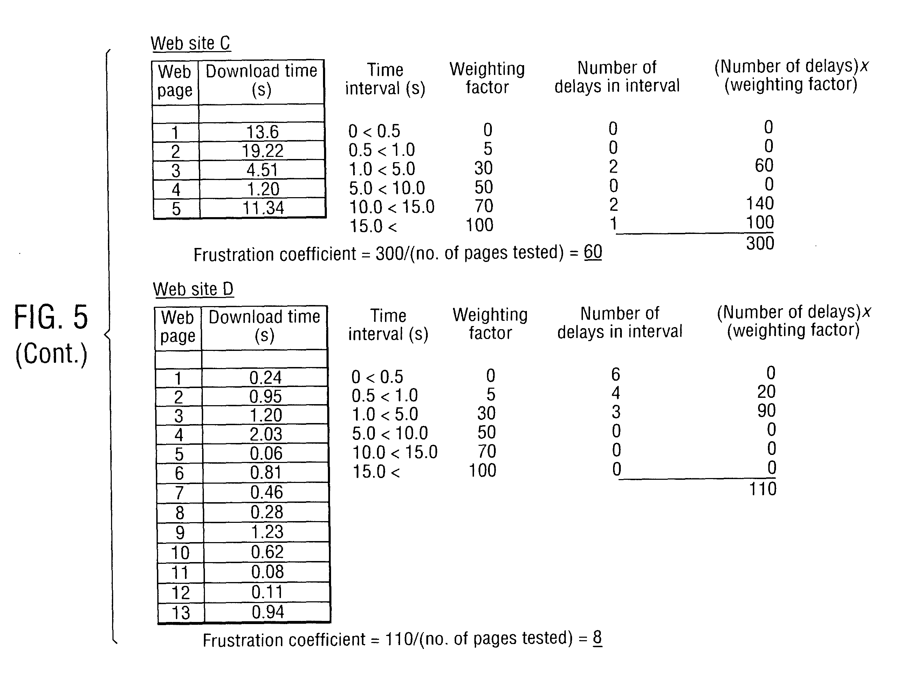

Figure 5 shows the results obtained when four web sites were tested and then analysed in accordance with the present invention. Web sites A, B, C and D have 6, 9, 5 and 13 pages respectively. Download times were measured for each of these pages and are shown in the tables of Figure 5. The results were then combined with the weighting factors calculated according to the present invention. A frustration coefficient was determined for each web site by the steps shown in the tables. It should be noted that although in this example web page download times have been used, the present invention is equally applicable to web services having delay times due to requests being serviced.

The results in Figure 5 show that web sites A and B, although having different distributions of download times, have very similar frustration coefficients™ (20 and 21) meaning that the two web sites perform reasonably equally in terms of delay times.

Web site C has only 5 pages, but the download times were fairly long and therefore a high frustration coefficient (60) was obtained. Web site D performed well during the testing, with only 3 of the 13 web pages taking longer than a second to download. The frustration coefficient of this web site is 8, indicating that potential users of the web site would not experience lesser frustration in using the web site.

## Claims

1. A method for measuring frustration experienced by a user of a system, which method comprises:
(a) requiring the user to initiate the method;
(b) after a delay time, requesting the user to provide a frustration number representative of the frustration caused by the delay time; and
(c) recording the frustration number provided for that delay time such that it is relateable to that delay time,
wherein the frustration number is stored in conjunction with the delay time.

2. A method according to claim 1, wherein the method is carried out using a program running on a computer.

3. A method according to any preceding claim, wherein the steps (a)-(c) of claim 1 are repeated using a plurality of delay times to generate a plurality of frustration numbers.

4. A method according to claim 1 or claim 2, which method comprises:
(a) requiring the user to initiate the method by displaying a web page requesting the user to press a button or follow a link;
(b) after the user has initiated the method, exhibiting a delay time and then displaying a further web page requesting the user to enter a frustration number representative of the frustration caused by the delay time; and
(c) recording the frustration number provided for that delay time such that it is relateable to that delay time.

5. A method according to claim 3 further comprising the step of converting the measured frustration numbers to a function representing a predicted frustration level as a function of delay time.

6. A method according to claim 3, which method further comprises storing each recorded frustration number and its associated delay time to form a frustration number database.

7. A method according to any preceding claim, wherein if the user abandons the system during the delay time, recording a frustration number representing a maximum level of frustration.

8. A method according to any of claim 4 or claim 7 as dependent on claim 4, wherein if the user presses a refresh button during the delay time, the method further comprises recording an indication that the user pressed the refresh button.

9. A method for providing a series of weighting factors, which weighting factors relate to delay times experienced by users of a system, which method comprises:
(a) defining a series of delay time intervals;
(b) calculating a single frustration number for each delay time, from recorded frustration numbers representative of frustration experienced by a user of a system due to delay times exhibited by the system;
(c) optionally normalising each single frustration number to produce a single normalised frustration number for each delay time interval;
(d) defining a weighting factor for each delay time interval as the single frustration number for that interval, or the single normalised frustration number for that interval.

10. A method according to claim 9, wherein calculating a single frustration number for each delay time interval comprises averaging the recorded frustration numbers for each delay time interval.

11. A method according to claim 9 or claim 10 wherein normalising comprises adjusting the single frustration numbers for each interval such that they comprise a range of integers.

12. A method according to claim 11, wherein the range has a minimum of 0 and a maximum of 100.

13. A method according to any of claims 9-12, wherein the frustration numbers are recorded using a method as defined in any of claims 1-8

14. A method for determining a frustration coefficient for a system prone to one or more delay times, which frustration coefficient is representative of the frustration caused to a user by the delay times in the system, which method comprises:
(a) testing the system to determine one or more delay times to which the system is prone;
(b) determining the number of delay times exhibited by the system within each one of a series of pre-defined delay time intervals;
(c) for each delay time interval, multiplying the number of delay times exhibited by the system in that interval by a weighting factor associated with that interval, to produce a frustration coefficient for each interval; and
(d) calculating a frustration coefficient for the system from the frustration coefficients of the delay time intervals.

15. A method according to claim 14, wherein calculating the frustration coefficient for the system comprises summing the frustration coefficients™ of the delay time intervals.

16. A method according to claim 14 or claim 15, which further comprises normalising the frustration coefficient for the system based upon the type of system tested.

17. A method according to any of claims 14-16, wherein the system comprises a web site, and the one or more delay times exhibited by the system comprise delay times exhibited when downloading one or more pages from the web site.

18. A method according to any of claims 14-17, wherein the weighting factors are provided by a method as defined in any of claims 9-13.

19. A method for determining a frustration coefficient for a system prone to one or more delay times, which frustration coefficient is representative of the frustration caused to a user by the delay times in the system, which method comprises:
(a) recording a series of frustration numbers representative of frustration experienced by a user of a system due to delay times exhibited by the system;
(b) providing a weighting factor for each of a series of pre-defined delay time intervals, based upon the recorded frustration numbers;
(c) testing a system to determine one or more delay times to which the system is prone; and
(d) determining a frustration coefficient for the system based upon the weighting factors and the number of delay times exhibited by the system in each of the pre-defined delay time intervals.

20. A method according to claim 19, wherein step (a) is carried out using a method as defined in any of claims 1-8.

21. A method according to claim 19 or 20, wherein step (b) is carried out using a method as defined in any of claims 9-13.

22. A method as defined in any of claims 19-21, wherein step (c) and step (d) are carried out using a method as defined in any of claims 14-18.

23. A method for measuring an abandonment profile of a system, which method comprises:
(a) requiring the user to initiate the method;
(b) after a delay time, requesting the user to provide an indication relevant to the delay time; and
(c) recording the indication provided for that delay time such that the indication is relateable to the delay time;
wherein if the user abandons the system during that delay time, the indication is an abandonment indication.

24. A method according to claim 23, further comprising the step of converting the measured abandonment data to a function representing the likely percentage of system users that will abandon the system as a function of delay time.

25. A method according to claim 23 or claim 24, wherein the method is carried out using a computer program running on a computer.

26. A method according to claim 25, wherein the indication is stored by the program in conjunction with the delay time.

27. A method according to claim 25 or claim 26, which method comprises:
(a) requiring the user to initiate the method by displaying a web page requesting the user to press a button or follow a link;
(b) after the user has initiated the method, exhibiting a pre-determined delay time and then displaying a further web page requesting the user to provide an indication relevant to the delay time; and
(c) recording the indication provided for that delay time such that the indication is relateable to the delay time;
wherein if the user abandons the web site during that delay time, the indication is an abandonment indication.

28. A method according to any of claims 23-27, wherein the steps (a)-(c) are repeated using a plurality of delay times to generate a plurality of indications.

29. A method according to claim 28, which method further comprises storing each indication and its associated delay time to form an abandonment database.

30. A method for providing a series of ratios, which ratios relate to an abandonment profile of a system, which method comprises:
(a) defining a series of delay time intervals; and
(b) calculating a ratio for each delay time interval, from pre-recorded indications representative of an abandonment profile of the system, which ratio is represented by the total number of abandonment indications recorded for each delay time interval to the total number of indications recorded for that interval.

31. A method for providing a series of abandonment percentages, which method comprises performing a method as defined in claim 30 and further comprising defining an abandonment percentage for each delay time interval as the ratio for that interval multiplied by 100, and optionally normalising each abandonment percentage to produce a normalised abandonment percentage for each delay time interval.

32. A method according to claim 31, wherein normalising comprises adjusting the abandonment percentages for each interval such that they comprise a range of integers.

33. A method according to any of claims 30-32, wherein the indications are recorded using a method as defined in any of claims 23-29.

34. A method for determining an abandonment coefficient for a system prone to one or more delay times, which abandonment coefficient is representative of the likelihood of a user abandoning the system during one of the delay times, which method comprises:
(a) testing the system to determine one or more delay times to which the system is prone;
(b) determining the number of delay times exhibited by the system within each one of a series of pre-defined delay time intervals;
(c) for each delay time interval, multiplying the number of delay times exhibited by the system in that interval by an abandonment percentage associated with that interval, to produce an abandonment coefficient for each interval; and
(d) calculating an abandonment coefficient for the system from the abandonment coefficients of the delay time intervals.

35. A method according to claim 34, wherein calculating the abandonment coefficient for the system comprises summing the abandonment coefficients for delay time intervals.

36. A method according to claim 34 or claim 35, which further comprises normalising the abandonment coefficient for the system based upon the type of system tested.

37. A method according to any of claims 34-36, wherein the system comprises a web site, and the one or more delay times exhibited by the system comprise delay times exhibited when downloading one or more pages from the web site.

38. A method according to any of claims 34-37, wherein the abandonment percentages are provided by a method as defined in any of claims 30-33.

39. A method for determining an abandonment coefficient for a system prone to one or more delay times, which abandonment coefficient is representative of the likelihood of a user abandoning the system, which method comprises:
(a) recording a series of indications representative of an abandonment profile of the system;
(b) providing an abandonment percentage for each of a series of pre-defined delay time intervals, based upon the recorded indications;
(c) testing a system to determine one or more delay times to which the system is prone; and
(d) determining an abandonment coefficient for the system based upon the abandonment percentages and the number of delay times exhibited by the system in each of the pre-defined delay time intervals.

40. A method according to claim 39, wherein step (a) is carried out using a method as defined in any of claims 23-29.

41. A method according to claim 39 or claim 40, wherein step (b) is carried out using a method as defined in any of claims 30-33.

42. A method as defined in any of claims 39-41, wherein step (c) and step (d) are carried out using a method as defined in any of claims 34-38.

43. A method for providing an improved transactional server system comprising testing the system by any of the methods of claims 1-42 and subsequently modifying the system to provide delay times which result in a required level of performance of the system.
